# EUROPEAN PATENT APPLICATION

(11) **EP 4 477 512 A1**
(43) Date of publication of application: **18.12.2024**
(21) Application number: 24181596.8
(22) Date of filing: 12.06.2024
(51) Int. Cl.: B62J 43/13, B62J 43/23, B62K 19/40, B60L 50/64, B60L 50/60, H01M 50/249, H01M 50/262, B62M 6/90

(54) **BICYCLE BATTERY ASSEMBLY**

(30) Priority: 16.06.2023 NL 2035116
(71) Applicant: Koninklijke Gazelle N.V., 6951 BP Dieren (NL)
(72) Inventor: van Nuland, Willem Toon, 6951 BP DIEREN (NL); Leushuis, Sophie Jasmijn Maria, 6951 BP DIEREN (NL); Kraaijvanger, Herman Martheus, 6951 BP DIEREN (NL)
(74) Representative: De Vries & Metman

(57) **Abstract**

Bicycle battery assembly (10) comprising a battery (2) and a casing, such as a frame tube (5) of a bicycle frame, with a receiving opening (7) for receiving the battery. An interfacing surface (14) at one end of the battery comprises a stop (20). The battery assembly comprises a lock (12) in the casing (5), the lock having a latch (17) which can be moved between a retracted position and a locking position engaging the stop (20) of the interfacing surface. The lock and the interfacing surface comprise interlocking members (29, 32) engaging each other upon insertion of the battery (2) in the receiving opening (7).

## Description

The present disclosure relates to a bicycle battery assembly and a bicycle provided with such a bicycle battery assembly.

Electric bicycles are usually provided with a removable battery, allowing to recharge the battery in a charger or to replace the battery if needed. The battery is accommodated in a battery casing mounted in or on the bicycle frame. Usually the casing receiving the removable battery is integrated in the bicycle frame, e.g., in the seat tube or down tube of the bicycle frame, as for example proposed in WO 2008/106976, JP 2000238675 A and EP 1 982 909 A1. The outer wall of the battery can be flush with the relevant frame part to give a visually integrated appearance.

To prevent theft of a removable bicycle battery, the battery casing can be provided with a lock having a latch which is moveable between a release position, allowing removal of the battery, and a locking position with the latch engaging a stop to block removal of the battery. The stop is usually a part or recess of an interfacing surface of the battery, e.g., an end plate mounted at one end of the battery. Optionally, the interfacing surface can be provided with a handle. Examples of such battery locks and interfacing surfaces are disclosed in WO 2018/019441 and EP 3 566 940 A1.

The battery is typically inserted into the casing using a tilting movement. In some systems the connection between the battery and the lock is such that the battery can be detached from the lock using some kind of tool, such as a screw driver, without using a matching key.

It is an object of the invention, to provide an effective anti-theft system for a bicycle battery system, in particular a lock that cannot be opened without appropriate use of a key.

The object of the invention is achieved with a battery assembly comprising a battery and a casing with a receiving opening for receiving the battery. An interfacing surface at one end of the battery, such as a mounted end plate, comprises a stop, such as a latch receiving recess. The casing comprises a lock with a latch which can be moved between a retracted position and a locking position where the latch engages the stop, so as to block removal of the battery. The lock and the interfacing surface comprise interlocking members engaging each other upon insertion of the battery in the receiving opening to limit movement in the longitudinal direction of the battery.

In a particular embodiment, the interlocking members include at least one hook extending from the lock pointing toward the receiving opening, and - for each one of the at least one hooks - a hook receiving recess in the interfacing surface receiving the respective hook when the battery is inserted into the casing.

Alternatively, or additionally, the interlocking members include at least one hook extending from the interfacing surface, and - for each one of the at least one hooks - a hook receiving recess in the slot or casing receiving the respective hook when the battery is inserted into the casing.

The at least one hook can for example be an integral part of the lock or the casing. Alternatively, or additionally, the at least one hook can be part of a strip mounted on the lock or the casing. Such a strip can, for example, be adapted for retrofitting to existing locks and battery assemblies, such as the system disclosed in WO 2018/019441.

A particular embodiment of such a strip can be provided with a passage opening or cut-out for passage of the latch of the lock when the latch is in the locking position. Optionally, the strip can have at least one hook at both sides of the passage opening. To mount the strip onto the lock, the strip can have a hooked top end, shaped to engage a top edge of the lock. A lower end of the strip can be provided with openings for fasteners, e.g., bolts.

The disclosed battery system can be used with an electric bicycle or with any other type of cycle or other vehicle comprising a battery powered electric drive.

The above-described aspects will hereafter be more explained with further details and benefits with reference to the drawings showing an exemplary embodiment.
Figure 1: shows an exploded view of a down tube of a bicycle comprising a battery;
Figure 2: shows the down tube with battery of Figure 1 in cross section;
Figure 3: shows the battery with associated parts in perspective view;
Figure 4: shows a lock and a blocking strip of a battery assembly according to the invention;
Figure 5: shows the lock and the blocking strip of Figure 4 when assembled;
Figure 6: shows a battery with a mounted end plate forming an interfacing surface of the battery assembly;
Figure 7: shows in longitudinal cross-section insertion of the battery of Figure 3 into the battery receiving recess;
Figure 8: shows the battery and lock of Figure 3 after insertion in longitudinal cross section through the side hook;
Figure 9: shows the battery and lock of Figure 3 after insertion in a central longitudinal cross section.

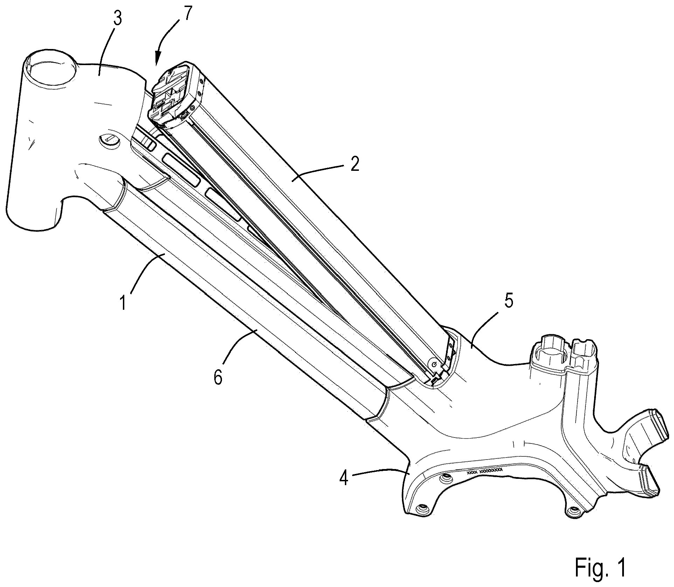

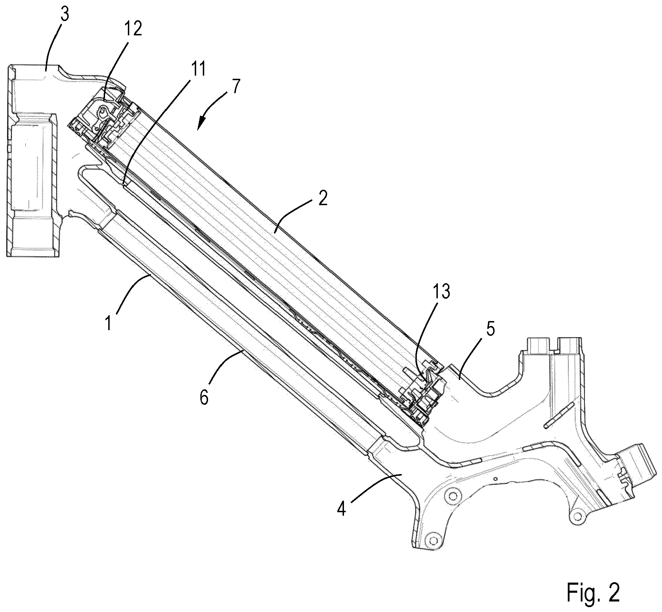

Figure 1 shows a down tube 1 of a bicycle with a battery 2 in exploded view. The down tube 1 slopes down from a head tube 3 at the front of the bicycle to a bottom bracket shell 4. In the shown exemplary embodiment, the down tube 1 comprises a pair of parallel tubes: an upper down tube 5 and a bottom down tube 6. The upper down tube 5 comprises a recess 7 for receiving the battery 2, as shown in cross section in Figure 2. Alternatively, a single down tube can be used with a recess for receiving the battery, or the battery can be received in a separate casing.

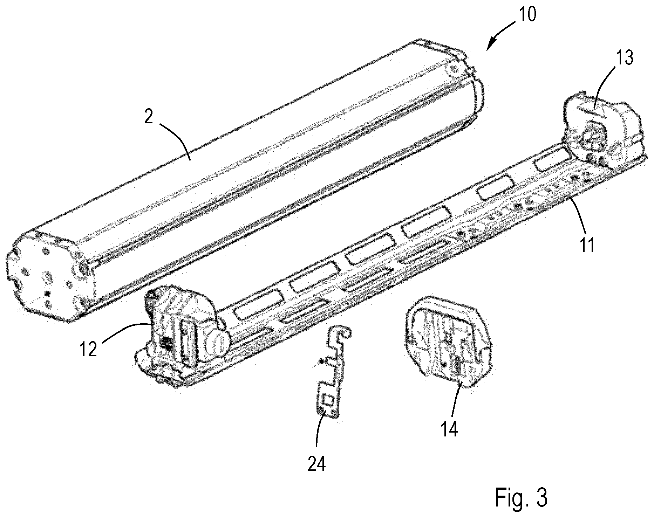

The battery 2 is part of a battery assembly 10 shown in exploded view in Figure 3. The battery assembly 10 comprises the battery 2, a longitudinal base plate 11, a lock 12 attached to one end of the longitudinal base plate 11, a stop 13 at the opposite end of the longitudinal base plate 11 and an end plate 14 to be mounted to one end of the battery to form an interfacing surface of the battery 2 for engaging the lock 12. In an alternative embodiment, the interfacing surface can be an integral part of the battery's outer wall. The longitudinal base plate 11 is positioned on the bottom of the receiving recess 7 of the upper down tube 5. The battery 2 with the end plate 14 fits within the space between the lock 12 and the stop 13, as shown in Figure 2. The battery assembly 10 further comprises a blocking strip 24, to be discussed hereafter.

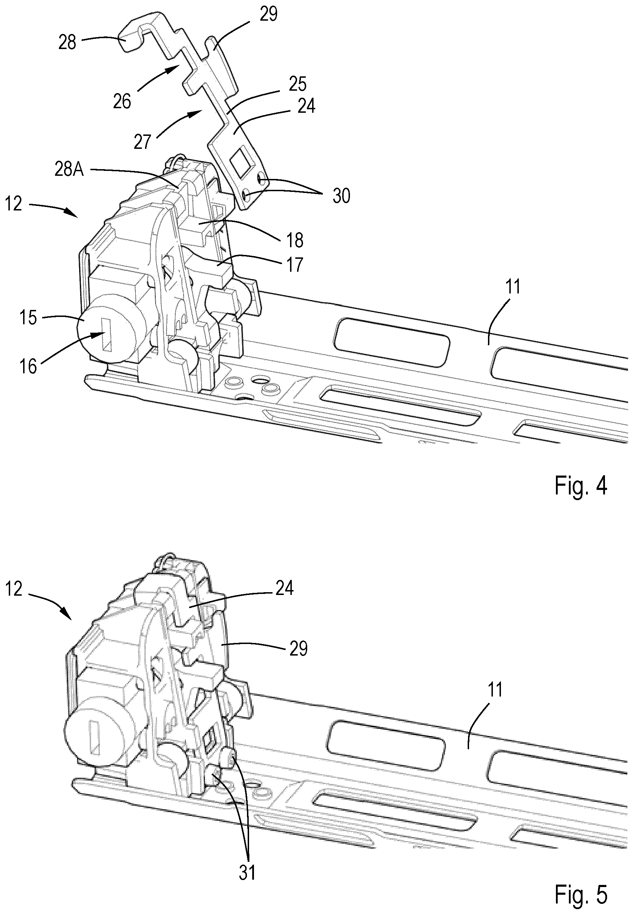

The lock 12 is of a known type. As shown in Figures 4 and 5, the lock 12 has a cylinder 15 with a key opening 16 for receiving a key (not shown), and a latch 17 movable between a retracted position and a locking position by turning the key.

At a distance above the latch 17 is a static stop 18 projecting from the lock 12 and having a U-shaped cross section shielding the latch 17 so as to reduce accessibility of the latch 17 from the top side of the gap between the lock 12 and a locked battery 2.

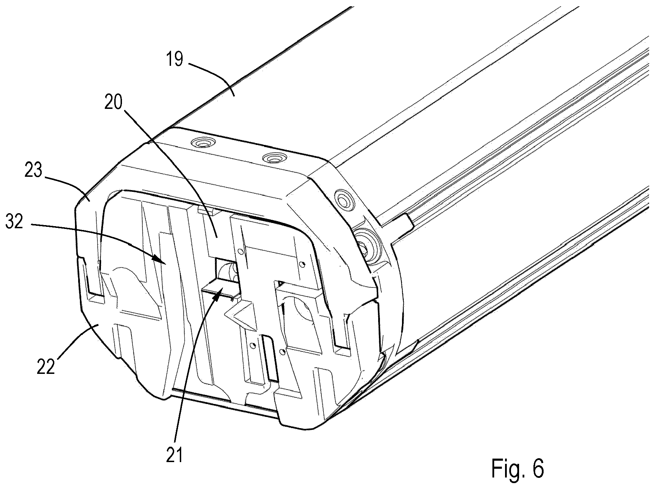

Figure 6 shows an outer end of the battery 2. The battery 2 has a longitudinal body 19 with two opposite outer ends. One of the outer ends is provided with the end plate 14 providing the interfacing surface. The end plate 14 comprises a stop 20 engaging the latch 17 of the lock 12 when the lock 12 is in the locking position, so as to block upward movement of the battery 2 when it is locked in the recess 7 of the upper down tube 5. In the shown embodiment, the stop 20 is an upper wall of a latch receiving recess 21 receiving the latch 17 of the lock 12 when the latch 17 is turned into the locking position.

The end plate 14 comprises a main part 22 fixed to the battery 2 and provided with the latch receiving recess 21, and a U-shaped handle 23 which is pivotable relative to the main part 22 between a folded position (as shown in Figure 6) and an unfolded position (not shown), allowing a user to grip the handle 23 and lift the battery 2. In the folded position, shown in Figure 4, the handle 23 is flush with the outer surfaces of the battery 2.

A blocking strip 24, shown in Figures 3, 4 and 5, is attached to a side of the lock 12 facing the end plate 14. The blocking strip 24 comprises a main strip section 25 with an upper cut-out 26 and a lower cut-out 27. The blocking strip 24 further comprises a downwardly pointing top hook 28 at one end of the main strip section 25 and an upwardly pointing side hook 29 at one of the longitudinal sides of the main strip section 25.

The top hook 28 of the blocking strip 24 fits over a ledge 28A on the top end of the lock 12, while the stop 18 extends through the upper cut-out 26 in the main strip section 25 and the latch 17 of the lock 12 extends through the lower cut-out 27 in the main strip section 25(see for instance Figure 5). The lower end of the main strip section 25 is provided with openings 30 for the passage of fasteners 31 to mount the blocking strip 24 fixedly to the lock 12, as shown in Figure 5.

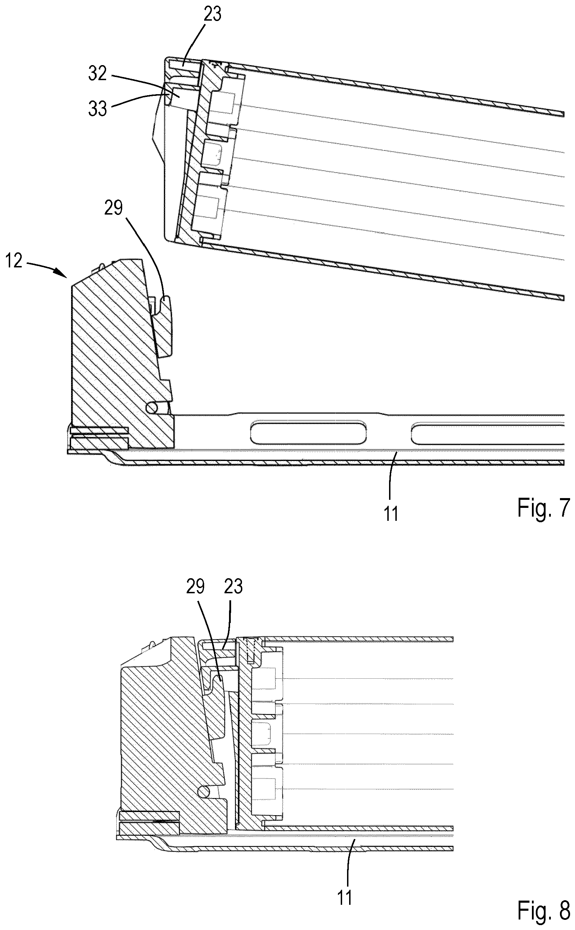

The end plate 14 on the end part of the battery 2 comprises a hook receiving recess 32 confined at its top end by a downwardly extending ledge 33 (Figures 7 and 8).

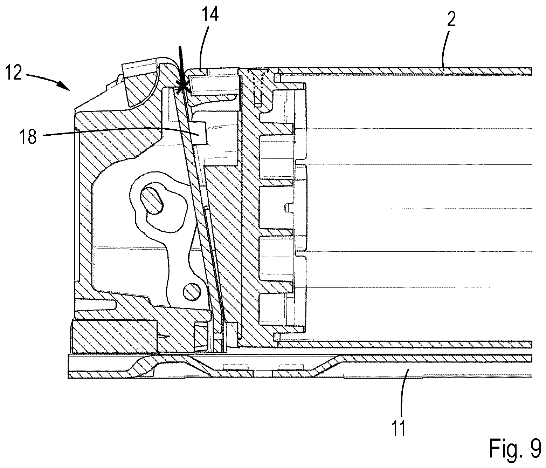

The battery 2 is moved into the battery receiving recess 7 of the upper down tube 5 with a tilting movement, as shown in Figure 7. During this movement the upwardly pointing side hook 29 of the blocking strip 24 slides into the hook receiving recesses 32 and behind the downwardly extending ledges 33 of the battery end plate 14, as shown in Figure 8, showing a longitudinal cross section through the side hook 29, and Figure 9, showing a longitudinal cross section through the blocking strip 24 through a plane between the upper and lower cut-outs 26, 27 of the blocking strip 24 and the side hook 29. In this position the side hook 29 and the downwardly pointing ledge 33 form interlocking members preventing movement of the battery 2 in longitudinal direction. The blocking strip 24 also fills the gap between the lock 12 and the end plate 14 of the battery 2. As a result, it is not possible anymore to wiggle a screw driver or similar tool between the lock 12 and the battery end plate 14 to reach and release the latch 17 of the lock 12.

By turning the key of the lock 12, the latch 17 is retracted. The user can grip the battery 2 and tilt it upward, so as to move the side hook 29 out of the hook receiving recess 32. The handle 23 of the end plate 14 can be unfolded and be used as a grip for the user to lift the battery 2 out of the recess 7 of the upper down tube 5.

The blocking strip 24 can for example be a metal, e.g., steel strip, stamped and folded to form the desired structure. Other materials, such as a plastic, can also be used, if so desired.

The drawings are schematic and not necessarily to scale. Details that are not required for understanding the present invention may have been omitted. The terms "upward", "downward", "below", "above", and the like relate to the embodiments as oriented in the drawings, unless otherwise specified.

## Claims

1. Bicycle battery assembly (10) comprising a battery (2) and a casing, such as a frame tube (5) of a bicycle frame, with a receiving opening (7) for receiving the battery,
wherein an interfacing surface (14) at one end of the battery comprises a stop (20);
wherein the battery assembly comprises a lock (12) in the casing (5), the lock having a latch (17) which can be moved between a retracted position and a locking position engaging the stop (20) of the interfacing surface;
**characterized in that** the lock and the interfacing surface comprise interlocking members (29, 32) engaging each other upon insertion of the battery (2) in the receiving opening (7) .

2. Bicycle battery assembly according to claim 1, wherein the interlocking members include:
- at least one hook (29) extending from the lock pointing toward the receiving opening (7), and
- at least one hook receiving recess (30) in the interfacing surface (14) receiving the at least one hook (29) when the battery is inserted into the casing (5).

3. Bicycle battery assembly according to claim 1 or 2, wherein the at least one hook (29) is mounted on the lock.

4. Bicycle battery assembly according to claim 3, wherein the at least one hook (29) is part of a blocking strip (24) mounted on the lock (12).

5. Bicycle battery assembly according to claim 4, the blocking strip (24) having an opening or cut-out (23) for passage of the latch (17) of the lock.

6. Strip (24) for use in a battery assembly according to claim 4 or 5.

7. Vehicle with an electric drive, in particular an electric bicycle, comprising a battery assembly (10) according to any one of claims 1 to 5.
